# EUROPEAN PATENT APPLICATION

(11) **EP 2 666 651 A1**
(43) Date of publication of application: **27.11.2013**
(21) Application number: 12168897.2
(22) Date of filing: 22.05.2012
(51) Int. Cl.: B60C 29/02, F16K 15/20

(54) **Valve device for a tubeless tire**

(71) Applicant: Bao Ley Co., Ltd., Huatan, Changhua 50353 (TW)
(72) Inventor: Lee, Chin Chuan, 50353 Huatan, Changhua (TW)
(74) Representative: Beck & Rössig European Patent Attorneys

(57) **Abstract**

A wheel rim device includes a rim (10) having a bridge (13) extending between two side walls (11), and a valve device (3) having a stem (30) engaged with the bridge (13) and having a seal (40) attached to the stem (30) for anchoring the stem (30) to the bridge (13) of the rim (10) and for making an air tight seal between the stem (30) and the rim (10), and the seal (40) includes a casing (41) engaged onto the stem (30) and engaged between the stem (30) and the bridge (13) for making an air tight seal between the stem (30) and the rim (10). The casing (41) is engaged onto a head (31) of the stem (30) for engaging with the bridge (13).

## Description

The invention relates to a valve device for a tubeless tire.

Typical valve devices for tubeless tires of bicycles comprise a stem to be attached to a wheel rim, and a separate gasket mounted between the wheel rim and the stem.

However, it is difficult to achieve a secure fixation between the stem and the wheel rim.

This technical problem is solved by a valve device according to claim 1. Advantageous embodiments are indicated in further claims.
FIGS. 1, 2 show cross sectional views of a valve device;
FIGS. 3, 4 show partial exploded views of the valve device; and
FIGS. 5, 6, 7 show cross sectional views of the valve device.

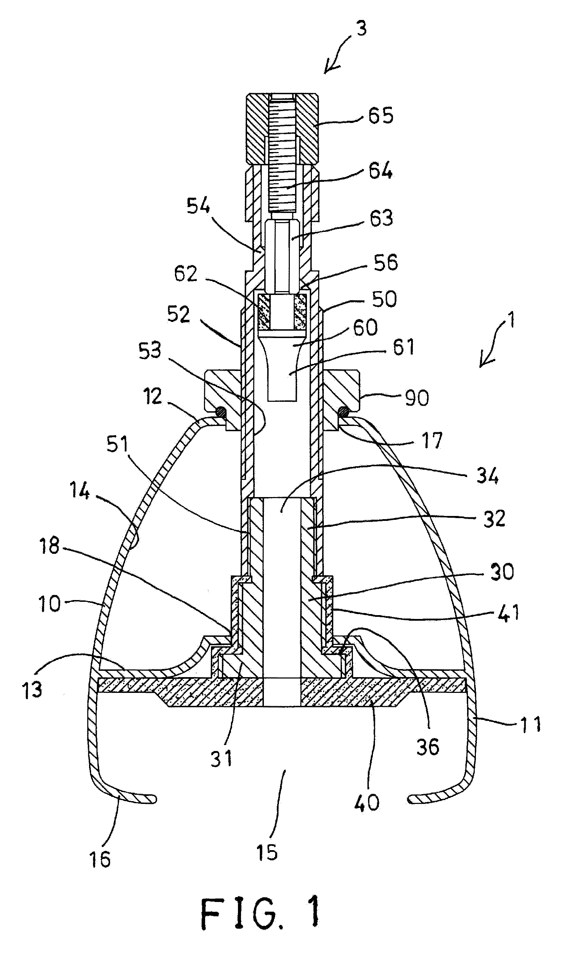

Referring to FIGS. 1-2, a wheel rim assembly 1 comprises a wheel rim 10 including an A-shaped section with two side walls 11 converged together to form a base 12, and a bridge 13 extending between the two side walls 11 for forming a chamber 14 therein. The rim 10 includes an outer peripheral channel 15 formed by the bridge 13 and the tire-holding fins 16 that are extended from the side walls 11 for coupling to a (tubeless) tire (not shown). An inflation valve device 3 is mounted in aligned orifice 17 that is formed in the base 12 and aperture 18 that is formed in the bridge 13.

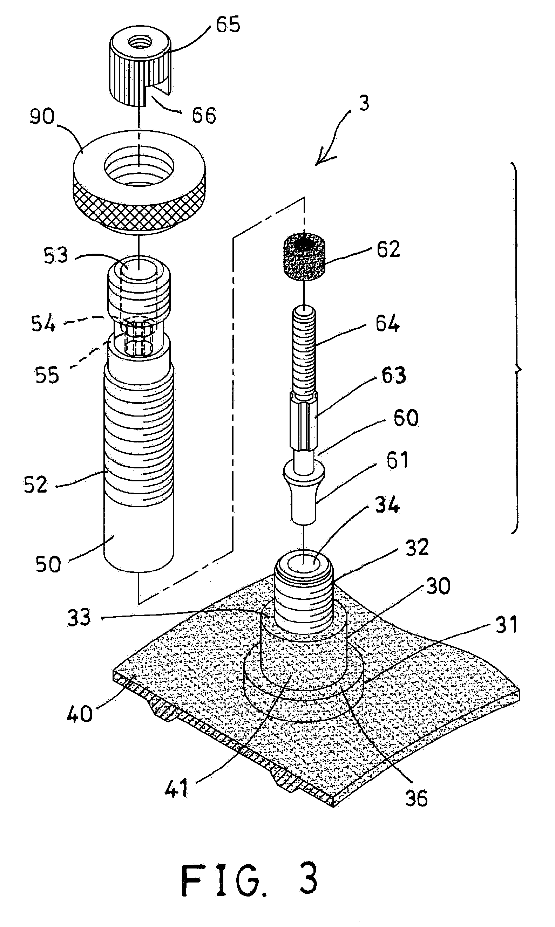

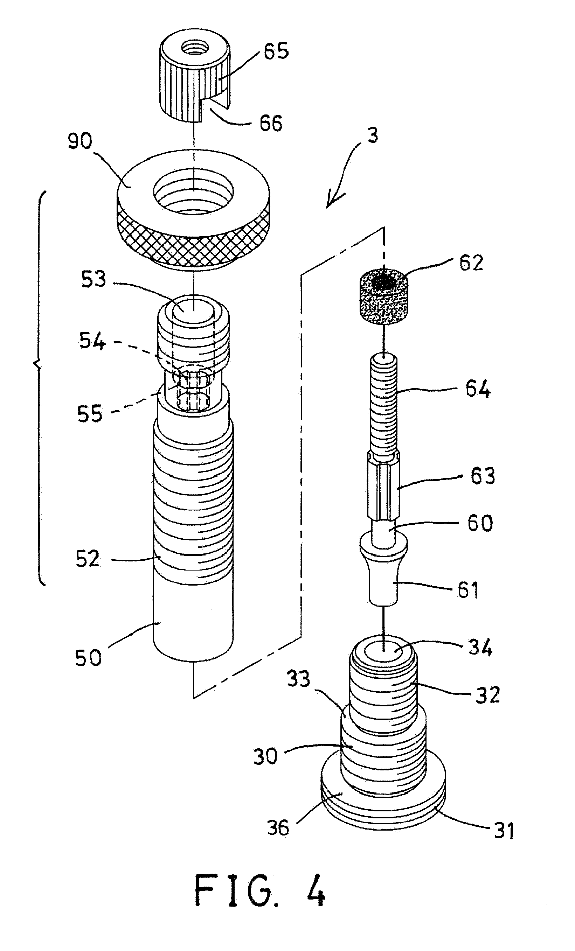

The valve device 3 includes a valve stem 30 (FIGS. 1-5) engaged into the aperture 18 of the bridge 13, a head 31 extended from the stem 30 and having an outer diameter greater than that of the stem 30 for anchoring the stem 30 to the bridge 13, and a reduced threaded segment 32 located opposite to the head 31 and having an outer diameter smaller than that of the stem 30 for forming an annular shoulder 33 between the stem 30 and the segment 32.

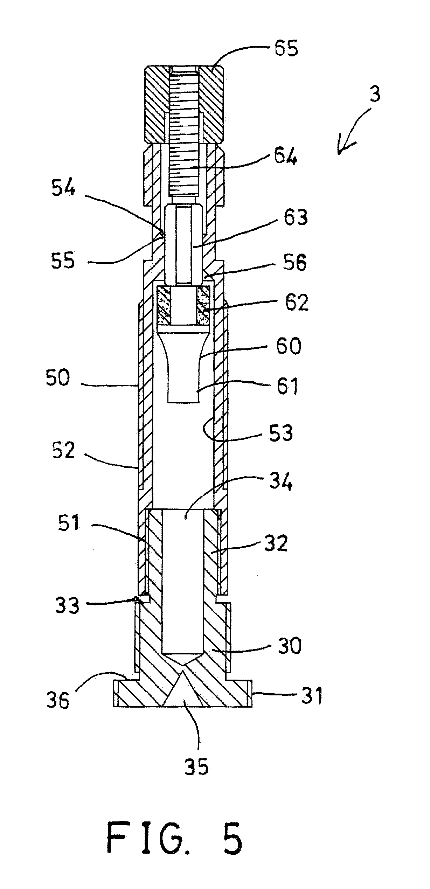

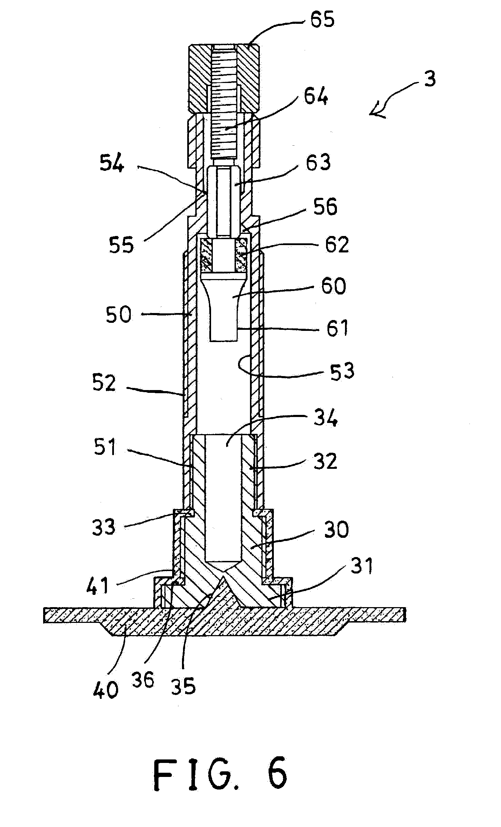

The stem 30 includes a (blind) bore 34 formed in the stem 30 and the threaded segment 32, and a V-shaped notch 35 formed in the head 31 (FIGS. 5, 6) and aligned with the bore 34 of the stem 30, and the head 31 is to be drilled to communicate the bore 34 and the notch 35 of the stem 30 with each other (FIGS. 1-2, 7). The stem 30 includes an annular abutment 36 formed between the stem 30 and the head 31 for engaging with the bridge 13. A sealing member or seal 40 is attached or molded to the head 31 and includes an outer diameter greater than that of the head 31 for engaging with the bridge 13 and for making an air tight seal between the stem 30 and the rim 10. The seal 40 includes a casing 41 molded and engaged onto the head 31 and/or the stem 30 for being engaged between the stem 30 and the bridge 13. In one embodiment the seal can be made of elastic material such as e.g. rubber.

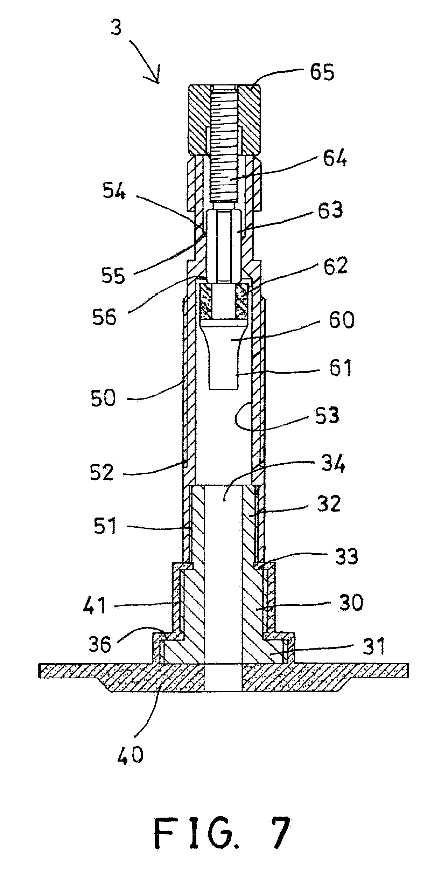

The casing 41 is molded onto the annular abutment 36 and engaged onto the annular shoulder 33 of the stem 30. After the seal 40 is engaged onto the stem 30 (FIG. 6), the head 31 of the stem 30 is drilled to communicate the bore 34 and the notch 35 of the stem 30 with each other (FIG. 7). A tube 50 is engaged through the orifice 17 of the base 12 and includes an inner thread 51 for engaging with the threaded segment 32, and an outer thread 52 for engaging with the rim 10 directly, or indirectly with a fastener 90. The tube 50 includes a compartment 53 formed therein, and one or more ribs 54 extended into the compartment 53 for forming one or more slots 55 and for forming a valve seat 56 in the tube 50. A valve piece 60 is engaged in the compartment 53 of the tube 50 and includes an enlarged valve head 61 received in the compartment 53 of the tube 50 for engaging with the valve seat 56, and a gasket 62 engaged onto the valve piece 60 and the valve head 61 for engaging with the valve seat 56 to block the compartment 53 of the tube 50.

The valve piece 60 includes one or more guides 63 for slidably engaging with the slots 55 or the ribs 54 of the tube 50 and for guiding the gasket 62 or the valve head 61 to move toward or away from the valve seat 56 of the tube 50. The valve piece 60 includes a threaded shank 64 extendible out of the tube 50 for engaging with a lock nut 65 which may move the gasket 62 or the valve head 61 toward or away from the valve seat 56 of the tube 50. The lock nut 65 includes an opening 66 for air to flow into the compartment 53 of the tube 50 even when the lock nut 65 is engaged with the tube 50.

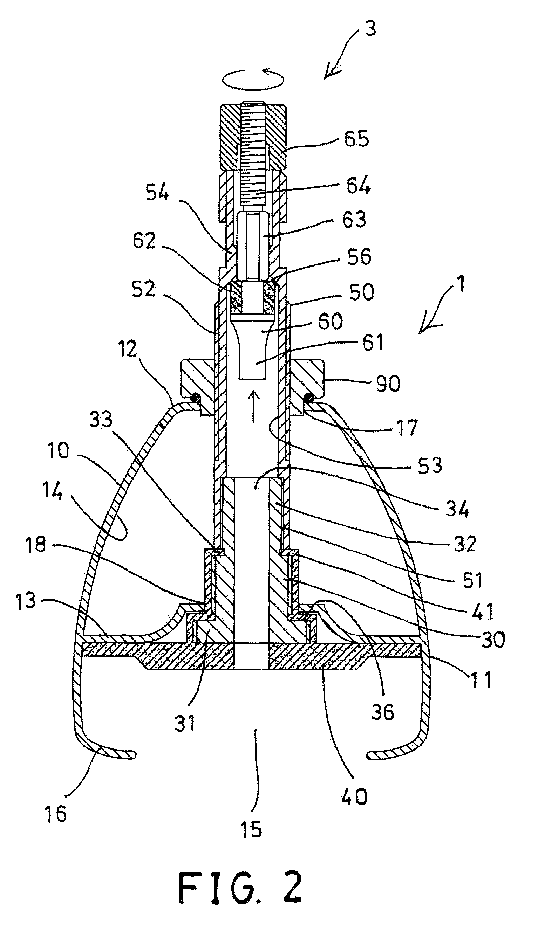

In operation, when the gasket 62 or the valve head 61 is moved away from the valve seat 56 of the tube 50 (FIG. 1), the air may flow into the compartment 53 and through the valve seat 56 and the bore 34 of the stem 30 and into the tubeless tire. The gasket 62 or the valve head 61 may be engaged with the valve seat 56 of the tube 50 (FIG. 2) to block the compartment 53 of the tube 50 and to prevent the air from flowing through the valve seat 56 and into the tubeless tire. The seal 40 is solidly attached to the stem 30 and includes a casing 41 engaged onto the head 31 and/or the stem 30 for engaging with the bridge 13 or the rim 10. The tube 50 and the stem 30 are two separated pieces, and the stem 30 includes a reduced dimension for easily engaging into a molding machine and for molding the seal 40 onto the stem 30.

The afore-described valve device 3 may be implemented in wheel rims other then described above. Generally, it may be implemented in any type of wheel rim of a tubeless tire and be specified further as indicated in any of claims 2 to 9.

## Claims

1. A wheel rim assembly comprising:
a rim (10) including two side walls (11),
a bridge (13) extending between the side walls (11),
an aperture (18) formed in the bridge (13), and
a valve device (3) attached to the bridge (13),
**characterized in that**
the valve device (3) includes a stem (30) engaged with the aperture (18) of the rim (10), and a seal (40) attached to the stem (30) and engaged with the bridge (13), and the seal (40) includes a casing (41) engaged onto the stem (30) and engaged between the stem (30) and the bridge (13).

2. A wheel rim assembly as claimed in claim 1, wherein the stem (30) includes a head (31) having an outer diameter greater than that of the stem (30) to form an abutment (36) between the stem (30) and the head (31).

3. A wheel rim assembly as claimed in claim 1 or 2, wherein the valve device (3) includes a tube (50) attached to the stem (30), a compartment (53) formed in the tube (50), a valve seat (56) formed in the tube (50), and a valve piece (60) received in the compartment (53) of the tube (50) and having a valve head (61).

4. A wheel rim assembly as claimed in claim 3, wherein the valve piece (60) includes a gasket (62) engaged with the valve head (61).

5. A wheel rim assembly as claimed in claim 3 or 4, wherein the tube (50) includes at least one rib (54) extended in the compartment (53), and the valve piece (60) includes at least one guide (63) for engaging with the rib (54) of the tube (50).

6. A wheel rim assembly as claimed in one of claim 3 to 5, wherein the valve device (3) includes a lock nut (65) threaded with a threaded shank (64) of the valve piece (60) and engaged with the tube (50).

7. A wheel rim assembly as claimed in one of claims 3 to 6, wherein the tube (50) includes at least one slot (55), and the valve piece (60) includes at least one guide (63) for engaging with the slot (55) of the tube (50).

8. A wheel rim assembly as claimed in one of claims 3 to 7, wherein the stem (30) includes a threaded segment (32) threaded with the tube (50) and having an outer diameter smaller than that of the stem (30) for forming an annular shoulder (33) between the stem (30) and the threaded segment (32).

9. A wheel rim assembly as claimed in one of claims 3 to 8, wherein the tube (50) includes an outer thread (52) for engaging with a fastener (90).

10. A wheel rim assembly as claimed in one of claims 1 to 9, wherein is configured as a wheel rim of a tubeless tire.

11. A valve device (3) for attachment to a wheel rim of a tubeless tire, the valve device (3) including a stem (30) engaged with the aperture (18) of the rim (10), and a seal (40) attached to the stem (30) and engaged with the bridge (13), and the seal (40) includes a casing (41) engaged onto the stem (30) and engaged between the stem (30) and the bridge (13).
